# EUROPÄISCHE PATENTSCHRIFT

(11) **EP 2 901 090 B1**
(45) Veröffentlichungstag und Bekanntmachung des Hinweises auf die Patenterteilung: **26.12.2018**
(21) Anmeldenummer: 13708719.3
(22) Anmeldetag: 27.02.2013
(51) Int. Cl.: F24S 30/40, F24S 30/00, F24S 23/70, F24S 23/77

(54) **SOLAR-REFLEKTORANORDNUNG UND VERFAHREN ZUR REFLEKTORAUSRICHTUNG**
SOLAR REFLECTOR ASSEMBLY AND METHOD FOR ORIENTING REFLECTORS
ENSEMBLE RÉFLECTEUR SOLAIRE ET PROCÉDÉ D'ORIENTATION DU RÉFLECTEUR

(30) Priorität: 29.02.2012 DE 102012203168
(43) Veröffentlichungstag der Anmeldung: 05.08.2015
(73) Patentinhaber: Isomorph S.r.l., 34013 Duino-Aurisina (TS) (IT)
(72) Erfinder: GRASSMANN, Matthias, 96052 Bamberg (DE)
(74) Vertreter: Eisenführ Speiser
(86) Internationale Anmeldenummer: PCT/EP2013/053888
(87) Internationale Veröffentlichungsnummer: WO 2013/127827

(56) Entgegenhaltungen:
- DE-A1- 4 221 896
- FR-A- 1 105 518
- FR-A1- 2 717 588
- JP-A- 2002 195 824

## Beschreibung

Die vorliegende Erfindung bezieht sich auf eine Solar-Reflektoranordnung zur Umlenkung von einfallenden Sonnenstrahlen auf ein gemeinsames Ziel, auf eine Reflektorhalterung für eine solche Solar-Reflektoranordnung und ein entsprechendes Verfahren zur Umlenkung von einfallenden Sonnenstrahlen auf das gemeinsame Ziel.

Ein der vorliegenden Erfindung zugrundeliegendes Ziel ist es, zu ermöglichen, einen oder mehrere Spiegel auf einfache Weise derart zur Sonne (genauer zu einfallenden Sonnenstrahlen) auszurichten, dass der oder die Spiegel das Sonnenlicht auf ein gemeinsames Ziel reflektieren.

Vor diesem Hintergrund wurde bereits eine Vorrichtung entwickelt, die unter dem Namen "Linearspiegel" als ein einfach zu bauendes und einfach zu betreibendes System miteinander verbundener Spiegel vorgestellt wurde, wobei die Spiegel insgesamt nur durch zwei Elektromotoren der Sonne nachgeführt werden können. Der "Linearspiegel" ist in WO 2008/119564 A1 beschrieben.

Zusammenfassend kann der bekannte "Linearspiegel" als eine Matrix ebener oder gekrümmter Spiegel beschrieben werden, von denen ein jeder auf eine eigene Schwenkachse montiert ist, wobei die Schwenkachsen gemeinsam durch Ausrichtung einer Achsanordnung nach der Höhe der Sonne ausgerichtet und die jeweiligen Spiegel durch Schwenken um die jeweilige Schwenkachse dem Sonnenlauf nachgeführt werden. Die Spiegel sind hierzu einer Spiegelanordnung zugeordnet.

Ein Nachteil des bekannten "Linearspiegels" und ähnlicher Anordnungen ist derjenige, dass die Spiegelanordnung zum Nachführen des Sonnenlaufs gedreht werden muss, was einen hohen konstruktiven Aufwand sowie vor allem auch einen hohen Kostenaufwand bedingt.

Ein alternativer Ansatz wird in US 2003/0136397 A1 beschrieben. Hierbei werden Spiegel über jeweiligen Anordnungen ausgerichtet, die eine Vielzahl von miteinander über Gelenke oder ähnliches verbundene Arme und Gestänge aufweisen, wobei die Arme auf die Richtung der einfallenden Sonnenstrahlen ausgerichtet werden. Die Anordnungen bringen bei einer derartigen Ausrichtung die Spiegel in eine solche Position, dass die Sonnenstrahlen in einer gewünschten Richtung umgelenkt werden. Die Vielzahl von Armen und Gestängen, die von US 2003/0136397 A1 vorgesehen werden, bringen wiederum einen nicht unerheblichen Konstruktionsaufwand mit sich.

JP 2002 195824 beschreibt den Oberbegriff des Anspruchs 1.

Es wird daher gewünscht, eine Lösung vorzustellen, die eine elegante Ausrichtung der Reflektoren zur Umlenkung einfallender Sonnenstrahlen erlaubt und gleichzeitig mit geringerem Kostenaufwand und vorzugsweise wenig Konstruktionsaufwand hergestellt werden kann.

Erfindungsgemäß wird nun eine Solar-Reflektoranordnung vorgeschlagen zur Umlenkung von einfallenden Sonnenstrahlen auf ein gemeinsames Ziel, mit wenigstens einem Reflektor und wenigstens einer Reflektorhalterung für den wenigstens einen Reflektor, wobei die Reflektorhalterung aufweist: einen Reflektorträger, der einen Reflektor trägt, einen Ausrichtarm, ein erstes Lager zur Aufnahme des Reflektorträgers und ein zweites Lager zur Aufnahme des Ausrichtarms, wobei das erste Lager und das zweite Lager auf einer Geraden angeordnet sind oder angeordnet werden können, die zur Richtung auf das Ziel ausgerichtet oder ausrichtbar ist, wobei der Reflektorträger und der Ausrichtarm miteinander gekoppelt sind und der Abstand zwischen dem ersten Lager und dem zweiten Lager gleich dem Abstand zwischen dem zweiten Lager und der Kopplung von Reflektorträger und Ausrichtarm ist, wobei der Ausrichtarm zur Richtung der einfallenden Sonnenstrahlen ausrichtbar ist.

Ferner wird eine Reflektorhalterung für eine solche Solar-Reflektoranordnung vorgeschlagen, mit einem Reflektorträger, der zum Tragen eines Reflektor ausgestaltet ist, einem Ausrichtarm, einem ersten Lager zur Aufnahme des Reflektorträgers und einem zweiten Lager zur Aufnahme des Ausrichtarms, wobei das erste Lager und das zweite Lager auf einer Geraden angeordnet sind oder angeordnet werden können, die zur Richtung auf das Ziel ausgerichtet oder ausrichtbar ist, wobei der Reflektorträger und der Ausrichtarm miteinander gekoppelt sind und der Abstand zwischen dem ersten Lager und dem zweiten Lager in angeordnetem Zustand gleich dem Abstand zwischen dem zweiten Lager und der Kopplung von Reflektorträger und Ausrichtarm ist,wobei der Ausrichtarm zur Richtung der einfallenden Sonnenstrahlen ausrichtbar ist.

Erfindungsgemäß wird zudem ein Verfahren zur Umlenkung von einfallenden Sonnenstrahlen auf ein gemeinsames Ziel mit den folgenden Schritten vorgeschlagen: Bereitstellen einer erfindungsgemäßen Vorrichtung, so dass das erste Lager und das zweite Lager auf einer Geraden angeordnet sind, die zur Richtung auf das Ziel ausgerichtet ist, Ausrichten des Ausrichtarms zur Richtung der einfallenden Sonnenstrahlen, wobei durch das Ausrichten des Ausrichtarms eine Normale des Reflektors parallel zur Winkelhalbierenden zwischen der Richtung der einfallenden Sonnenstrahlen und der Richtung auf das gemeinsame Ziel ausgerichtet wird, so dass einfallende Sonnenstrahlen von dem Reflektor auf das Ziel umgelenkt werden.

Bei der erfindungsgemäßen Solar-Reflektoranordnung und dem entsprechenden Verfahren wird - anders als beim "Linearspiegel" - nicht die Spiegelanordnung als Ganzes bewegt, sondern lediglich die Ausrichtung der in der Reflektoranordnung enthaltenen Reflektorhalterungen (und damit die der entsprechenden Reflektoren) innerhalb der Anordnung angepasst. Letztlich kann die Solar-Reflektoranordnung als Ganzes als ortsfest in Position und Gesamtausrichtung angesehen werden, wobei unter Anpassung der jeweiligen Reflektornormalen die Position der einzelnen Reflektoren nicht oder nur geringfügig verändert wird.

Als Vorteil hieraus ergibt sich, dass die Spiegelanordnung beispielsweise fest an eine Wand montiert werden kann und aufwändige Mechanik zum Mitdrehen der Spiegelanordnung entbehrlich wird. Besonders vorteilhaft ist, dass infolge einer ortsfesten Anbringung, beispielsweise an einer Wand oder ähnlichen Trag-Struktur, die Spiegelanordnung selbst keine tragende Funktion im Sinne der Statik mehr übernehmen muss, sondern nunmehr der Informationsübertragung dient. Unter Information werden in diesem Zusammenhang Daten beziehungsweise Angaben zu der Positionierung des oder der Spiegel sowie zu deren Bewegungsmuster verstanden, zum Beispiel zur Beantwortung der Frage: Wo soll bzw. sollen der oder die Spiegel positioniert sein, wie soll er bzw. sollen sie ausgerichtet sein, und wie soll er bzw. sollen sie sich bewegen?

Es ist zu bemerken, dass bei einer Nutzung der vorliegenden Erfindung auch zum Zwecke einer erhöhten Flexibilität auf den Verzicht auf eine Bewegung der Solar-Reflektoranordnung als Ganzem insofern verzichtet werden kann, als dass die Erfindung beispielsweise durch ein zusätzliches Neigen oder Schwenken der ganzen Solar-Reflektoranordnung (was letztlich einem beweglichen Ziel gleichgestellt ist) nicht ihre Funktion und Wirkungsweise verliert. Zudem könnte selbst bei einem derartigen Neigen oder Schwenken das Ziel relativ zur Reflektoranordnung als Ganzem ebenfalls mitgeführt werden, so dass sich keine Relativbewegung zwischen Reflektoranordnung und Ziel ergibt.

Im Unterschied zur vorliegenden Erfindung ist beim in WO 2008/119564 A1 beschriebenen Linearspiegel die Spiegelebene, in sich die Spiegel befinden, nicht feststehend, wobei es durch die Nachführung nach der Sonnenhöhe zu einer Änderung der räumlichen Position der einzelnen Spiegel kommt. Die hier vorgestellte Erfindung hat mit dem "Linearspiegel" allerdings gemein, dass mehrere Einzelreflektoren in einer bevorzugten Ausgestaltung durch insgesamt nur zwei Motoren dem Sonnenstand gemeinsam nachgeführt werden können.

Hintergrund der vorliegenden Erfindung sind die folgenden Überlegungen:
An beliebigen, aber gegebenen Positionen im Raum befinden sich eine Lichtquelle, ein Spiegel (als Beispiel eines Reflektors) und ein Ziel. Die Richtung des Spiegels wird durch seine Flächennormale beschrieben. Es soll mit dem Spiegel ein Lichtstrahl aus der Lichtquelle auf das Ziel reflektiert werden.

Die hierzu nötige Ausrichtung des Spiegels (dessen Position gegeben ist) ist dann durch die Richtung des einfallenden Lichtstrahls und die Richtung des reflektierten Lichtstrahls eindeutig gegeben, wobei der einfallende und der reflektierte Lichtstrahl in einer Ebene liegen und die Flächennormale des Spiegels (der hier der Einfachheit halber zunächst als Planspiegel angenommen ist) ist die Winkelhalbierende zwischen einfallendem und reflektiertem Licht in dieser Ebene. Dies ergibt sich aus dem Reflexionsgesetz.

Um eine Umlenkung von Sonnenstrahlen auf ein Ziel zu bewirken, ist zu erreichen, dass bei einem jeweiligen Sonnenstand gerade die obige Anforderung erfüllt ist, dass also die Flächennormale des Spiegels in der beschriebenen Weise die Winkelhalbierende zwischen einfallenden und reflektierten Lichtstrahl darstellt. Zur Veranschaulichung der Situation sei noch einmal darauf hingewiesen, dass der einfallende Lichtstrahl vom Spiegel aus gesehen die Richtung zur Lichtquelle (zum Beispiel Sonne) angibt und der reflektierte Lichtstrahl entsprechend die Richtung zum Ziel angibt (natürlich unter der Annahme, dass der Spiegel das einfallende Licht auf das Ziel reflektiert).

Betrachtet man zwei Vektoren **E** (für die Einfallsrichtung) und **R** (für die Reflektionsrichtung), so definieren diese zwei Vektoren, die eine gleiche Länge aufweisen sollen (z.B., Einheitsvektoren) eine Ebene, in der sich ebenfalls die Winkelhalbierende **W** zwischen diesen beiden Vektoren befindet. In einer zeichnerischen Darstellung, bei der die Vektoren **E, R** und **W** von einem gemeinsamen Punkt **O** ausgehend dargestellt werden, lässt sich gedanklich eine Verschiebung beispielsweise des Vektors **E** (parallel zu dessen Richtung) so vornehmen, dass nicht mehr der Anfangspunkt der Vektordarstellung sondern deren Endpunkt mit dem Anfangspunkt der Darstellung des Vektors **R** im Punkt **O** zusammenfällt. Konstruiert man nun eine Richtungsvektor **W'** vom verschobenen Anfangspunkt der Darstellung des Vektors **E** zum (unverschobenen) Endpunkt der Darstellung des Vektors **R,** so ist die Richtung des Vektors **W'** parallel zu der der oben angesprochenen Winkelhalbierenden **W** zwischen **E** und **R.** Mit verschobenem Vektor **E,** ergibt sich aus (verschobenem) Vektor **E,** Vektor **R** und Vektor **W'** ein gleichschenkliges Dreieck.

Für die Zwecke der vorliegenden Erfindung kommt es im Übrigen nur auf die Richtung, nicht aber auf die Länge einer konstruierten Winkelhalbierenden an.

Es wurde realisiert, dass es für die Konstruktion der Winkelhalbierenden ausreichend ist, wenn die Vektoren **E** und **R** als Schenkel eines gleichschenkligen Dreiecks genutzt werden, wobei sich dann die Richtung der Winkelhalbierenden als die Richtung des Basis (also der dritten, in der Regel ungleichlangen Seite des Dreiecks) ergibt.

Bei der Umlenkung von Sonnenstrahlen auf ein Ziel ergibt sich beim einfallenden Sonnenlicht zudem eine Vereinfachung dahingehend, dass wegen der großen Entfernung zur Sonne die auf verschiedene Spiegel fallenden Sonnenstrahlen als parallel angesehen werden können. Damit ist, wenn sich auch die verschiedenen Spiegel an verschiedenen räumlichen Positionen befinden, doch für jeden Spiegel die Richtung des einfallenden Lichts für alle praktischen Zwecke gleich. Die Richtung hingegen, in der (von jeweiligen einzelnen Spiegel aus gesehen) das Ziel liegt, ist unterscheidet sich für zwei jeweilige Spiegel. Im Fall eines feststehenden Ziels ist diese Richtung allerdings für den einzelnen Spiegel wiederum konstant.

Für die praktische Realsierung der obigen Konstruktionsüberlegungen ist es ausreichend, ein erstes und ein zweites Lager vorzusehen, die mit ihrer Lage und ihrem Abstand den Vektor **R** ergeben (also auf das Ziel ausgerichtet sind), wobei ein Ausrichtarm für den Vektor **E** steht (d.h. zunächst primär die Lage des Vektors wiedergibt). Der Abstand einer Kopplung oder Verbindung des Ausrichtarms mit dem Reflektorträger vom zweiten Lager, das den Ausrichtarm aufnimmt, ergibt die Länge des Vektors **E.** Ist nun der Reflektorträger in dem ersten Lager gelagert und in einer solchen Weise mit dem Ausrichtarm gekoppelt, dass der Kopplungspunkt (als geometrische Vereinfachung der eigentlichen Kopplung) sich entlang des Reflektorträgers bewegen kann, ergibt sich die Ausrichtung des Reflektorträgers bei einer Ausrichtung des Ausrichtarms parallel zur Richtung der einfallenden Sonnenstrahlen notwendigerweise parallel zur Winkelhalbierenden zwischen der Richtung der einfallenden Sonnenstrahlen und der Richtung auf das Ziel, so dass ein vom Reflektorträger getragener Reflektor die Sonnenstrahlen auf das Ziel umlenkt.

Die vorliegende Erfindung ist nicht prinzipiell auf den Fall eines feststehenden Ziels beschränkt, sondern ermöglicht auch eine flexiblere Ausrichtung auf ein Ziel, das relativ zu der Solar-Reflektoranordnung nicht ortsfest ist, obgleich der Fall eines in Relation zur Solar-Reflektoranordnung fixierten Ziels aufgrund der fehlenden Notwendigkeit einer Nachführung nach der Bewegung des Ziels bevorzugt wird.

Bevorzugt sind eine Normale des Reflektors (bestimmt als die Winkelhalbierende zwischen einfallenden und ausfallenden Strahlen) und die durch den Reflektorträger bestimmte Richtung parallel zueinander, so dass die Ausrichtung des Reflektorträgers ohne weiteres zu einer gewünschten Ausrichtung des Reflektors führt. Innerhalb gewisser Grenzen ist es allerdings auch möglich, dass zwischen der Reflektornormalen und dem Reflektorträger ein leichter Versatz vorgesehen ist. Insbesondere wenn der Lichtfleck, der sich durch das Umlenken auf das Ziel für einen jeweiligen Reflektor auf dem Ziel bzw. im Zielbereich bildet, kleiner ist als die nutzbare Fläche des Ziels kann die durch den Versatz entstehenden Ungenauigkeit in Kauf genommen werden. Für eine ausreichend kleine Abweichung zwischen durch das erste und zweite Lager definierten Geraden und der Richtung auf das Ziel kann durch den oben genannten Versatz eine - wenn auch unvollständige - Kompensation vorgenommen werden.

Dies kann beispielsweise dazu genutzt werden, dass eine Solar-Reflektoranordnung mit jeweils fixierten ersten und zweiten Lagern zum Umlenkung von Sonnenstrahlen auf zwei oder mehrere verschiedene Ziele genutzt werden kann, wobei die Ziele in der Nähe der durch die Positionierung des jeweiligen ersten und zweiten Lagers vorgegebenen Richtung angeordnet sind. Die Auswahl der jeweils genutzten Ziels (d.h. des Ziels, auf das die Sonnenstrahlen umgelenkt werden) kann durch eine konstruktiv einfache geringfügige Neigung bzw. Kippung der Reflektoren gegenüber den jeweiligen Reflektorträgern erreicht werden.

Eine weitere Möglichkeit, die Solar-Reflektoranordnung in einer Weise auszugestalten, die eine schnelle Umstellung von einem Ziel auf ein anderes erlaubt, besteht darin, wenigstens zwei Positionen vorzusehen, an denen das zweite Lager angeordnet sein kann bzw. wenigstens zwei zweite Lager vorzusehen, in denen der Ausrichtarm gelagert werden kann. Diese Alternativpositionen für das genutzte zweite Lager sind hierbei zwar in jeweils gleichem Abstand zum ersten Lager angeordnet, wobei sich allerdings die dann durch eine Gerade, die durch das erste und zweite Lager bestimmt ist, bestimmten Richtungen unterscheiden und so eine Umlenkung - nach entsprechender jeweiliger Umrüstung - auf wenigstens zwei unterschiedliche Ziele erlauben.

Es ist zu bemerken, dass obgleich der Ausrichtarm zwar beispielsweise in Form einer Stange oder eines Stabes ausgebildet sein kann, die Erfindung nicht darauf beschränkt ist. Der Ausrichtarm dient dem Zweck, durch Richtung und Länge (also dem Abstand zwischen zweitem Lager und der Kopplung zum Reflektorträger) die gewünschte Ausrichtung des Reflektorträgers zu erreichen. Dieser Zweck kann beispielsweise auch dadurch erreicht werden, dass der Ausrichtarm in Form einer Kette oder Schnur ausgeführt ist, die infolge einer Spannung vom zweiten Lager weg ebenfalls den Abstand zwischen zweitem Lager und Kopplung mit dem Reflektorträger und eine entsprechende Ausrichtung erlaubt.

Es ist ferner zu bemerken, dass die erfindungsgemäße Solar-Reflektoranordnung über eine Fixierung des ersten und zweiten Lagers hinaus für die Ausrichtung der Reflektoren im Wesentlichen keine weiteren Elemente als die jeweiligen Lager, die jeweiligen Ausrichtarme und die jeweiligen Reflektorträger benötigt.

Bei einer vorteilhaften Ausgestaltung eines Aspekts der Solar-Reflektoranordnung nimmt das erste Lager den Reflektorträger so auf, dass ein Schwenken und Neigen des Reflektors möglich ist, wobei eine Rotation des Reflektors um eine Längsachse des Reflektorträgers verhindert wird. Bei dieser Ausgestaltung verbleibt der Reflektor gegenüber einer Längsachse des Reflektorträgers und damit letztlich gegenüber der Solar-Reflektoranordnung und deren Aufstellung in einer vorgegebenen Ausrichtung. Werden beispielsweise rechteckige Reflektoren benutzt, würde eine Drehung der Reflektors um eine Längsachse des Reflektorträgers zu einem Überlappen oder gar einer Kollision zwischen benachbarten Reflektoren führen können.

Bei einer weiteren vorteilhaften Ausgestaltung eines Aspekts der Solar-Reflektoranordnung nimmt das zweite Lager den Ausrichtarm so auf, dass ein Schwenken und Neigen des Ausrichtarms möglich ist. Es grundsätzlich möglich und auch von der Erfindung erfasst, dass der Ausrichtarm, der in Richtung der einfallenden Sonnenstrahlen auszurichten ist, so gelagert ist, dass er auf eine Bewegung innerhalb der vermeintlichen Sonnenbahnebene beschränkt ist. Eine solche beschränkende Lagerung müsste allerdings zunächst für den jeweiligen Aufstellort angepasst werden, wobei zudem zur optimalen Nutzung eine jeweiligen Anpassung an die sich im Jahresverlauf ändernde vermeintliche Sonnenbahnebene vorzusehen wäre. Eine größere Flexibilität ist allerdings erreichbar, wenn das zweite Lager ein Neigen und Schwenken des Ausrichtarms, also eine Bewegung mit zwei Freiheitsgraden ermöglicht, um so unabhängig von einer vermeintlichen Sonnenbahnebene eine gewünschte Ausrichtung des Ausrichtarms und damit letztlich der Reflektoren zu erlauben.

In einem vorteilhaften Aspekt der obigen Ausgestaltung weist das zweite Lager ein Kreuzgelenk, ein Kugelgelenk oder ein Verformungsgelenk zur Aufnahme des Ausrichtarms auf. Kreuzgelenke und Kugelgelenke sind bekannte Lösungen für die Aufgabenstellung, eine Bewegung mit einem Schwenken und Neigen zu erlauben. Weitere Möglichkeiten hierfür sind Verformungsgelenke, bei denen eine Verformbarkeit eines Verbindungselements ausgenutzt wird. Beispiels für solche Verformungsgelenke sind eine Verbindung mittels einer Feder (insbesondere einer Spiralfeder) oder eine Lösung, bei der die Verbindung durch eine mit den zu verbindenden Elementen (hier Lagerhalterung für das zweite Lager und Ausrichtarm) gekoppelte Schnur oder Kette gebildet wird.

Bei einer anderen vorteilhaften Ausgestaltung eines Aspekts der Solar-Reflektoranordnung sind der Reflektorträger und der Ausrichtarm mit einem Drehschubgelenk miteinander gekoppelt. Das Drehschubgelenk erlaubt eine Verschiebung des Kopplungspunktes zwischen Reflektorträger und Ausrichtamt entlang der Längsachse des Reflektorträgers, wobei bei dieser Verschiebung eine Drehung des Gelenk oder zumindest des Ausrichtarm innerhalb einer zur Längsachse senkrechten Ebene möglich und vorgesehen ist. Mit dieser Drehbarkeit wird vermieden, dass die unterschiedliche Ausrichtung des Ausrichtarms zur einer Drehung der Reflektorträgers selbst um seine Längsachse führen würde.

Bei einer weiteren vorteilhaften Ausgestaltung eines Aspekts der Solar-Reflektoranordnung erstreckt sich der Ausrichtarm über das zweite Lager und/oder die Kopplung mit dem Reflektorträger hinaus. Der zur gewünschten Ausrichtung des Reflektorträgers genutzte und notwendige Teil des Ausrichtarms ist der zwischen dem zweiten Lager und der Kopplung zum Reflektorträger, wobei sich der Ausrichtarm weiter erstrecken kann. Diese Fortsetzung des Ausrichtarms kann insbesondere zu einer Verbindung des Ausrichtarms mit einer Konstruktion zum Ausrichten von mehreren Ausrichtarmen genutzt werden (siehe unten).

Bei einer weiteren vorteilhaften Ausgestaltung eines Aspekts der Solar-Reflektoranordnung weist diese eine Vielzahl von Reflektoren und jeweiligen Reflektorhalterungen auf, wobei die Ausrichtarme der Vielzahl von Reflektorhalterungen zur gemeinsamen Ausrichtung miteinander verbunden sind.

Die Ausrichtung der Ausrichtarme zur Richtung der einfallenden Sonnenstrahlen, die infolge der praktisch parallelen Sonnenstrahlen für alle Ausrichtarme der Reflektorhalterungen in gleicher Weise erfolgen kann, kann damit durch eine passende gemeinsame mechanische Ansteuerung der ersten Arme, etwa durch Gelenke und ein Verbindungsgestänge auf besonders einfache Weise erreicht werden.

Bei einer anderen vorteilhaften Ausgestaltung eines Aspekts der Solar-Reflektoranordnung ist der Reflektor zumindest teilweise eben und/oder zumindest teilweise konkav gewölbt.

Die vorliegende Erfindung ist nicht auf einen planen oder ebenen Reflektor oder Spiegel beschränkt, wobei durch eine zumindest teilweise konkave Wölbung des Reflektors bereits eine zusätzliche Fokussierung im Ziel möglich ist.

Ist das erste Lager gegenüber der Kombination von Reflektorträger und Reflektor so positioniert, dass der Reflektorträger (mit dem daran angebrachten Reflektor) im Wesentlichen im Schwerpunkt der Kombination gelagert ist, ergibt sich der Vorteil, dass durch Reflektorträger und Reflektor keine für die Ausrichtung auf das Ziel relevanten Kräfte innerhalb der Gesamtanordnung ausgeübt werden. Auf diese Weise kann der Ausrichtarm leichter und konstruktiv einfacher ausgebildet werden, da vom Ausrichtarm nur geringe Kräfte zur Ausrichtung des Reflektors aufgebracht bzw. übertragen werden müssen.

Im Folgenden wird die vorliegende Erfindung anhand von in den Figuren dargestellten Ausführungsbeispielen weiter illustriert und erläutert. Hierbei zeigt
- Fig. 1: eine schematische Illustration eines Ausführungsbeispiels der erfindungsgemäßen Solar-Reflektoranordnung und
- Fig. 2: ein schematisches Ablaufdiagramm eines Ausführungsbeispiels des erfindungsgemäßen Verfahrens.

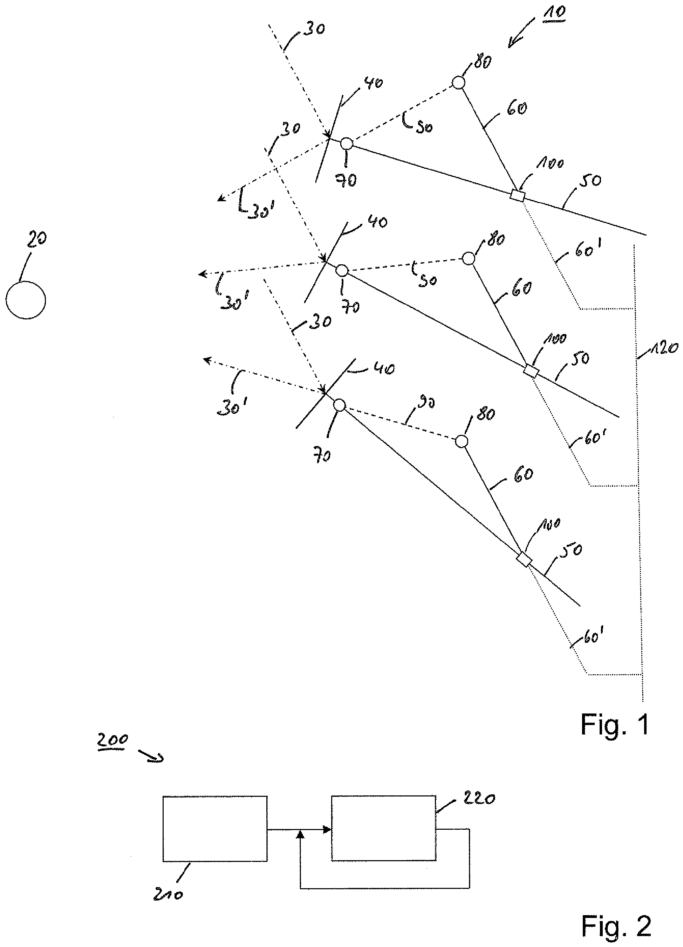

Fig. 1 zeigt eine schematische Illustration eines Ausführungsbeispiels der erfindungsgemäßen Solar-Reflektoranordnung 10. Die Solar-Reflektoranordnung 10 dient zur Umlenkung von einfallenden Sonnenstrahlen 30 auf ein Ziel 20. Die umgelenkten Sonnenstrahlen sind mit Bezugszeichen 30' bezeichnet.

Die Solar-Reflektoranordung 10 umfasst mehrere (hier beispielhaft drei) Reflektorhalterungen mit Reflektoren 40 in Form von planen Spiegeln. Die Reflektorhalterungen umfassen jeweils einen Reflektorträger 50, einen Ausrichtarm 60, ein erstes Lager 70 und ein zweites Lager 80. Das erste und zweite Lager 70, 80 sind voneinander in einem Abstand beabstandet und definieren jeweils eine Gerade, die auf das Ziel 20 gerichtet ist (vgl. gestrichelte Linien 90). Die Lager sind durch ein Gerüst (nicht dargestellt) örtlich fixiert. Die Ausrichtarme 60 und der jeweilige Reflektorträger 50 sind durch ein Drehschubgelenk 100 miteinander verbunden, wobei sich das Drehschubgelenk 100 entlang des Reflektorträgers 50 bewegen kann. Die Ausrichtarme 60 erstrecken sich jeweils über das Drehschubgelenk 100 hinaus (durch punktierte Linie 60' dargestellt) und sind mit einem Gestänge 120 verbunden, dass eine gemeinsame Ausrichtung der Ausrichtarme 60 erlaubt.

Da das erste und zweite Lager 70, 80 eine Richtung zum Ziel 20 definieren und die Länge des Ausrichtarms 60 zwischen dem zweiten Lager 80 und dem Drehschubgelenk 100 dem Abstand zwischen dem ersten und zweiten Lager 70, 80 entspricht, ist damit bei einer Ausrichtung des Ausrichtarms 60 nach den einfallenden Sonnenstrahlen 30 der Reflektorträger 50 in Richtung der Winkelhalbierenden zwischen der Richtung der einfallenden Sonnenstrahlen 30 und der Richtung der umgelenkten Sonnenstrahlen 30' ausgerichtet.

Fig. 2 zeigt ein schematisches Ablaufdiagramm eines Ausführungsbeispiels des erfindungsgemäßen Verfahrens 200 zur Umlenkung von einfallenden Sonnenstrahlen auf ein gemeinsames Ziel.

Zunächst wird in Schritt 210 eine erfindungsgemäße Solar-Reflektoranordnung zur Umlenkung von Sonnenstrahlen bereitgestellt. Dies ist vorzugsweise eine Solar-Reflektoranordnung gemäß einer bevorzugten Ausführungsform der vorliegenden Erfindung. Die Solar-Reflektoranordnung wird so aufgestellt, dass erste Lager und das zweite Lager auf einer Geraden angeordnet sind, die auf das Ziel, auf das die Sonnenstrahlen umzulenken sind, gerichtet ist. Die Ausrichtarme der Solar-Reflektoranordnung werden in einem Schritt 220 in Richtung der einfallenden Sonnenstrahlen ausgerichtet.

Durch das Ausrichten in Schritt 220 (bei entsprechender Bereitstellung der Solar-Reflektoranordnung in Schritt 210) wird eine Normale der jeweiligen Reflektoren parallel zu der Winkelhalbierenden zwischen der Richtung der einfallenden Sonnenstrahlen und der Richtung auf das gemeinsame Ziel ausgerichtet, so dass die einfallenden Sonnenstrahlen von den jeweiligen Reflektoren auf das Ziel umgelenkt werden.

Durch Wiederholung von Schritt 220 in vorbestimmbaren Intervallen oder stufenlos wird die Umlenkungsrichtung dem sich ändernden Sonnenstand angepasst. Solange das gemeinsame Ziel relativ zu der Solar-Reflektoranordnung unbewegt bleibt, müssen lediglich die Ausrichtarme der Sonne nachgeführt werden.

## Patentansprüche

1. Solar-Reflektoranordnung (10) zur Umlenkung von einfallenden Sonnenstrahlen (30) auf ein gemeinsames Ziel (20), mit:
wenigstens einem Reflektor (40) und wenigstens einer Reflektorhalterung für den wenigstens einen Reflektor (40),
wobei die Reflektorhalterung aufweist:
- einen Reflektorträger (50), der einen Reflektor (40) alleinig trägt,
- einen Ausrichtarm (60),
- ein erstes Lager (70) zur Aufnahme des Reflektorträgers (50), und
- ein zweites Lager (80) zur Aufnahme des Ausrichtarms (60),
wobei das erste Lager (70) und das zweite Lager (80) auf einer Geraden (90) angeordnet sind oder angeordnet werden können, die zur Richtung auf das Ziel (20) ausgerichtet oder ausrichtbar ist,
wobei der Reflektorträger (50) und der Ausrichtarm (60) miteinander gekoppelt sind und **dadurch gekennzeichnet, dass**
der Abstand zwischen dem ersten Lager (70) und dem zweiten Lager (80) gleich dem Abstand zwischen dem zweiten Lager (80) und einer Kopplung (100) von Reflektorträger (50) und Ausrichtarm (60) ist,
wobei der Ausrichtarm (60) im Einsatz der Solar-Reflektoranordnung (10) zur Richtung der einfallenden Sonnenstrahlen (30) ausgerichtet ist.

2. Solar-Reflektoranordnung (10) nach Anspruch 1, wobei das erste Lager (70) den Reflektorträger (50) so aufnimmt, dass ein Schwenken und Neigen des Reflektors (40) möglich ist, wobei eine Rotation des Reflektors (40) um eine Längsachse des Reflektorträgers (50) verhindert wird.

3. Solar-Reflektoranordnung (10) nach einem der vorstehenden Ansprüche, wobei das zweite Lager (80) den Ausrichtarm (60) so aufnimmt, dass ein Schwenken und Neigen des Ausrichtarms (60) möglich ist.

4. Solar-Reflektoranordnung (10) nach Anspruch 3, wobei das zweite Lager (80) ein Kreuzgelenk, ein Kugelgelenk oder ein Verformungsgelenk zur Aufnahme des Ausrichtarms (60) aufweist.

5. Solar-Reflektoranordnung (10) nach einem der vorstehenden Ansprüche, wobei der Reflektorträger (50) und der Ausrichtarm (60) mit einem Drehschubgelenk (100) miteinander gekoppelt sind.

6. Solar-Reflektoranordnung (10) nach einem der vorstehenden Ansprüche, wobei sich der Ausrichtarm (60) über das zweite Lager (80) und/oder die Kopplung (100) mit dem Reflektorträger (50) hinaus erstreckt.

7. Solar-Reflektoranordnung (10) nach einem der vorstehenden Ansprüche mit einer Vielzahl von Reflektoren (40) und jeweiligen Reflektorhalterungen, wobei die Ausrichtarme (60) der Vielzahl von Reflektorhalterungen zur gemeinsamen Ausrichtung miteinander verbunden sind.

8. Solar-Reflektoranordnung (10) nach einem der vorstehenden Ansprüche, wobei der Reflektor (40) zumindest teilweise eben ist und/oder zumindest teilweise konkav gewölbt ist.

9. Reflektorhalterung für eine Solar-Reflektoranordnung (10) nach einem der vorstehenden Ansprüche, mit:
- einem Reflektorträger (50), der zum alleinigen Tragen eines Reflektor (40) ausgestaltet ist,
- einem Ausrichtarm (60),
- einem ersten Lager (70) zur Aufnahme des Reflektorträgers (50), und
- einem zweiten Lager (80) zur Aufnahme des Ausrichtarms (60),
wobei das erste Lager (70) und das zweite Lager (80) auf einer Geraden (90) angeordnet sind oder angeordnet werden können, die zur Richtung auf das Ziel (20) ausgerichtet oder ausrichtbar ist,
wobei der Reflektorträger (50) und der Ausrichtarm (60) miteinander gekoppelt sind und **dadurch gekennzeichnet, dass**
der Abstand zwischen dem ersten Lager (70) und dem zweiten Lager (80) in angeordnetem Zustand gleich dem Abstand zwischen dem zweiten Lager (80) und einer Kopplung (100) von Reflektorträger (50) und Ausrichtarm (60) ist,
wobei der Ausrichtarm (60) im Einsatz der Solar-Reflektoranordnung (10) zur Richtung der einfallenden Sonnenstrahlen (30) ausgerichtet ist.

10. Verfahren (200) zur Umlenkung von einfallenden Sonnenstrahlen (30) auf ein gemeinsames Ziel (20), mit:
Bereitstellen (210) einer Solar-Reflektoranordnung (10) nach einem der Ansprüche 1 bis 8, so dass ein erstes Lager (70) und ein zweites Lager (80) auf einer Geraden (90) angeordnet sind, die zur Richtung auf das Ziel (20) ausgerichtet ist,
Ausrichten (220) eines Ausrichtarms (60) zur Richtung der einfallenden Sonnenstrahlen (30),
wobei durch das Ausrichten des Ausrichtarms (60) eine Normale eines Reflektors parallel zur Winkelhalbierenden zwischen der Richtung der einfallenden Sonnenstrahlen (30) und der Richtung auf das gemeinsame Ziel (20) ausgerichtet wird, so dass einfallende Sonnenstrahlen (30) von dem alleinig von einem Reflektorträger getragenen Reflektor (40) auf das Ziel (20) umgelenkt werden.

## Claims

1. A solar reflector arrangement (10) for deflection of incident sun rays (30) onto a common target (20), having:
at least one reflector (40) and at least one reflector holding means for the at least one reflector (40),
wherein the reflector holding means has:
- a reflector support (50) which solely bears a reflector (40),
- an orientation arm (60),
- a first bearing (70) to receive the reflector support (50), and
- a second bearing (80) to receive the orientation arm (60),
wherein the first bearing (70) and the second bearing (80) are or can be arranged on a straight line (90) which is oriented or can be oriented in the direction of the target (20),
wherein the reflector support (50) and the orientation arm (60) are coupled to one another and **characterised in that**
the distance between the first bearing (70) and the second bearing (80) is the same as the distance between the second bearing (80) and a coupling (100) of reflector support (50) and orientation arm (60),
wherein the orientation arm (60) is oriented in the direction of the incident sun rays (30) when the solar reflector arrangement (10) is in use.

2. A solar reflector arrangement (10) according to claim 1, wherein the first bearing (70) receives the reflector support (50) in such a manner that a pivoting and inclining of the reflector (40) is possible, wherein a rotation of the reflector (40) about a longitudinal axis of the reflector support (50) is prevented.

3. A solar reflector arrangement (10) according to any one of the preceding claims, wherein the second bearing (80) receives the orientation arm (60) in such a manner that a pivoting and inclining of the orientation arm (60) is possible.

4. A solar reflector arrangement (10) according to claim 3, wherein the second bearing (80) has a universal joint, a ball-and-socket joint or a deformation joint to receive the orientation arm (60).

5. A solar reflector arrangement (10) according to any one of the preceding claims, wherein the reflector support (50) and the orientation arm (60) are coupled to one another by means of a turning and sliding joint (100).

6. A solar reflector arrangement (10) according to any one of the preceding claims, wherein the orientation arm (60) extends beyond the second bearing (80) and/or the coupling (100) to the reflector support (50).

7. A solar reflector arrangement (10) according to any one of the preceding claims, having a plurality of reflectors (40) and respective reflector holding devices, wherein the orientation arms (60) of the plurality of reflector holding devices are connected to one another for common orientation.

8. A solar reflector arrangement (10) according to any one of the preceding claims, wherein the reflector (40) is at least partially plane and/or is at least partially concavely curved.

9. A reflector holding means for a solar reflector arrangement (10) according to any one of the preceding claims, having
- a reflector support (50) designed to bear by itself a reflector (40),
- an orientation arm (60),
- a first bearing (70) to receive the reflector support (50), and
- a second bearing (80) to receive the orientation arm (60),
wherein the first bearing (70) and the second bearing (80) are arranged or arrangeable on a straight line (90) which is oriented or can be oriented in the direction of the target (20), wherein the reflector support (50) and the orientation arm (60) are coupled to one another and **characterised in that**
the distance between the first bearing (70) and the second bearing (80) in the arranged state is the same as the distance between the second bearing (80) and a coupling (100) of reflector support (50) and orientation arm (60),
wherein the orientation arm (60) is oriented in the direction of the incident sun rays (30) when the solar reflector arrangement (10) is in use.

10. A method (200) of deflecting incident sun rays (30) onto a common target (20), having:
provision (210) of a solar reflector arrangement (10) according to any one of claims 1 to 8, so that a first bearing (70) and a second bearing (80) are arranged on a straight line (90) oriented in the direction of the target (20),
orientation (220) of an orientation arm (60) in the direction of the incident sun rays (30),
wherein through the orientation of the orientation arm (60), a normal of a reflector is oriented parallel to the bisectrix between the direction of the incident sun rays (30) and the direction towards the common target (20), so that incident sun rays (30) are deflected onto the target (20) by the reflector (40) supported solely by a reflector support.

## Revendications

1. Ensemble réflecteur solaire (10) destiné à dévier des rayons solaires incidents (30) sur une cible (20) commune, comprenant :
au moins un réflecteur (40) et au moins un élément de retenue de réflecteur pour le au moins un réflecteur (40),
dans lequel l'élément de retenue de réflecteur présente :
- un support de réflecteur (50), qui porte uniquement un réflecteur (40),
- un bras orientable (60),
- un premier appui (70) destiné à loger le support de réflecteur (50), et
- un deuxième appui (80) destiné à loger le bras orientable (60),
dans lequel le premier appui (70) et le deuxième appui (80) sont agencés ou peuvent être agencés sur une droite (90) qui est orientée ou peut être orientée en direction de la cible (20),
dans lequel le support de réflecteur (50) et le bras orientable (60) sont accouplés l'un à l'autre
et **caractérisé en ce que**
l'écart entre le premier appui (70) et le deuxième appui (80) est identique à l'écart entre le deuxième appui (80) et un accouplement (100) du support de réflecteur (50) et du bras orientable (60),
dans lequel le bras orientable (60), lors de l'utilisation de l'ensemble réflecteur solaire (10), est orienté en direction des rayons solaires incidents (30).

2. Ensemble réflecteur solaire (10) selon la revendication 1, dans lequel le premier appui (70) loge le support de réflecteur (50) de sorte qu'un pivotement et une inclinaison du réflecteur (40) sont possibles, dans lequel une rotation du réflecteur (40) autour d'un axe longitudinal du support de réflecteur (50) est empêchée.

3. Ensemble réflecteur solaire (10) selon l'une quelconque des revendications précédentes, dans lequel le deuxième appui (80) loge le bras orientable (60) de sorte qu'un pivotement et une inclinaison du bras orientable (60) sont possibles.

4. Ensemble réflecteur solaire (10) selon la revendication 3, dans lequel le deuxième appui (80) présente un joint de Cardan, un joint à rotule ou un joint de déformation pour le logement du bras orientable (60).

5. Ensemble réflecteur solaire (10) selon l'une quelconque des revendications précédentes, dans lequel le support de réflecteur (50) et le bras orientable (60) sont accouplés l'un à l'autre au moyen d'un joint articulé cylindrique (100).

6. Ensemble réflecteur solaire (10) selon l'une quelconque des revendications précédentes, dans lequel le bras orientable (60) s'étend au-delà du deuxième appui (80) et/ou de l'accouplement (100) comprenant le support de réflecteur (50).

7. Ensemble réflecteur solaire (10) selon l'une quelconque des revendications précédentes comprenant une pluralité de réflecteurs (40) et des éléments de retenue de réflecteur respectifs, dans lequel les bras orientables (60) de la pluralité d'éléments de retenue de réflecteur sont reliés les uns aux autres aux fins d'orientation commune.

8. Ensemble réflecteur solaire (10) selon l'une quelconque des revendications précédentes, dans lequel le réflecteur (40) est au moins en partie plat et/ou est au moins en partie de courbure concave.

9. Elément de retenue de réflecteur pour un ensemble réflecteur solaire (10) selon l'une quelconque des revendications précédentes, comprenant :
- un support de réflecteur (50), qui est conçu pour porter un réflecteur (40),
- un bras orientable (60),
- un premier appui (70) destiné à loger le support de réflecteur (50), et
- un deuxième appui (80) destiné à loger le bras orientable (60),
dans lequel le premier appui (70) et le deuxième appui (80) sont agencés ou peuvent être agencés sur une droite (90) qui est orientée ou peut être orientée en direction de la cible (20),
dans lequel le support de réflecteur (50) et le bras orientable (60) sont accouplés l'un à l'autre
et **caractérisé en ce que**
l'écart entre le premier appui (70) et le deuxième appui (80), une fois ceux-ci agencés, est identique à l'écart entre le deuxième appui (80) et un accouplement (100) du support de réflecteur (50) et du bras orientable (60),
dans lequel le bras orientable (60), lors de l'utilisation de l'ensemble réflecteur solaire (10), est orienté en direction des rayons solaires incidents (30).

10. Procédé (200) pour la déviation de rayons solaires incidents (30) sur une cible (20) commune, comprenant :
la fourniture (210) d'un ensemble réflecteur solaire (10) selon l'une quelconque des revendications 1 à 8, de sorte qu'un premier appui (70) et un deuxième appui (80) sont agencés sur une droite (90) qui est orientée en direction de la cible (20),
l'orientation (220) d'un bras orientable (60) en direction des rayons solaires incidents (30),
dans lequel, à la suite de l'orientation du bras orientable (60), une normale d'un réflecteur est orientée parallèlement à la bissectrice entre la direction des rayons solaires incidents (30) et la direction sur la cible (20) commune, de sorte que les rayons solaires incidents (30) sont déviés sur la cible (20) par le réflecteur (40) porté uniquement par un support de réflecteur.
